Europäisches Patentamt

European Patent Office

Office européen des brevets

(11) Veröffentlichungsnummer: **0 342 545**
**A1**

## EUROPÄISCHE PATENTANMELDUNG

(21) Anmeldenummer: 89108601.9

(22) Anmeldetag: **12.05.89**

(51) Int. Cl.⁴: **B23K 35/30 , B23K 35/14 ,**
**C04B 37/00 , C04B 37/02**

(30) Priorität: **20.05.88 CH 1939/88**

(43) Veröffentlichungstag der Anmeldung:
**23.11.89 Patentblatt 89/47**

(84) Benannte Vertragsstaaten:
**AT CH DE FR GB IT LI**

(71) Anmelder: **LONZA AG**
**Gampel/Wallis Geschäftsleitung Basel**
**CH-4002 Basel(CH)**

(72) Erfinder: **Gampp, Kurt, Dr.**
**Hofmattweg 51**
**Arlesheim (Baselland)(CH)**
Erfinder: **Heinzen, Georg**
**Gartenstrasse 59**
**Muttenz (Baselland)(CH)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) Fe-Cr-Ni-B-SiC-Lötfolie.

(57) Es wird eine amorphe bzw. teilamorphe Eisen-Chrom-Nickel-Bor-Siliciumcarbid-Lötfolie beschrieben, die geeignet zum Hartlöten von Keramikteilen oder Keramik mit Metall ist.

EP 0 342 545 A1

EP 0 342 545 A1

## Fe-Cr-Ni-B-SiC-Lötfolie

Die Erfindung betrifft eine Lötfolie aus einer amorphen oder teilamorphen Eisen-Chrom-Nickel-Bor-Siliciumcarbid-Legierung zum Hartlöten von Keramik mit Keramik oder Keramik mit Metallen.

Für Hochtemperaturanwendungen sowohl von Metallen als auch bei Keramik ist das Hartlöten ein Fügeverfahren mit zunehmender Bedeutung. Der Begriff Hartlöten kann auch durch den Begriff Aktivlöten erklärt werden (Praktische Metallographie, Sonderbände, Stuttgart, 18, 1977).

Die gefügten Werkstoffe haben den Vorteil, dass Grundwerkstoffe mit unterschiedlichen Eigenschaften kombiniert werden können. Der Zweck des Fügens von Metall mit Keramik kann beispielsweise ein Verschleissschutz, eine Wärmedämmung, ein Korrosionsschutz, eine elektrische Isolation, eine vakuumdichte Durchführung oder dergleichen sein. Die Fügetechnik durch Hartlöten ist auch für die Verbindung von Keramikteilen, gleicher oder verschiedener chemischer Zusammensetzung, von Bedeutung; insbesondere, wenn komplizierte Körper aus einfach geformten Teilen zusammengefügt werden sollen.

Besonders wichtig für eine dauerhafte Verbindung der Teile ist, dass diese Teile vom Lot gut benetzt werden.

Biegsame Folien sind vielfach einfacher zu handhaben und besser zu dosieren als Pulver oder Pasten.

Wegen ihrer hohen Duktilität eignen sich für das Hartlöten besonders amorphe oder teilamorphe Folien, die durch rasches Abschrecken aus der Schmelze erhalten werden.

Diese Folien bestehen aus nur einer, aber sehr homogenen Schicht.

Für eine gute Benetzung ist notwendig, dass jede oxidische Verunreinigung an der Oberfläche der Lötmittel vermieden wird, daher wird das Hartlöten mit den erwähnten Folien vorzugsweise im Vakuum oder unter Schutzgas ausgeführt.

Aufgabe der vorliegenden Erfindung ist es, neue Lötfolien aus einer amorphen oder teilamorphen Eisen-Chrom-Nickel-Bor-Siliciumcarbid-Legierung gemäss Patentanspruch 1 aufzuzeigen, die in besonderer Weise geeignet sind, Keramikteile untereinander oder Keramikteile mit Metallen durch Hartlöten zu verbinden.

Die Eisen-Chrom-Nickel-Bor-Siliciumcarbid-Legierung hat erfindungsgemäss eine Zusammensetzung von 20 bis 50 Atom% Eisen, 5 bis 20 Atom% Chrom, 10 bis 30 Atom% Nickel, 5 bis 20 Atom% Bor und 0 bis 30 Mol% Siliciumcarbid.

Vorteilhaft gelangen Legierungen mit Zusammensetzungen von 20 bis 40 Atom% Eisen, 8 bis 18 Atom% Chrom, 15 bis 25 Atom% Nickel, 8 bis 18 Atom% Bor und 0 bis 20 Mol% Siliciumcarbid zum Einsatz.

Eine besonders bevorzugte Legierung ist $Fe_{38}Cr_{14}Ni_{18}B_{12}SiC_{18}$. Wichtige Voraussetzung ist, dass die verwendeten Legierungsbestandteile Eisen, Chrom, Nickel, Bor und Siliciumcarbid für die Herstellung der amorphen bzw. teilamorphen Folien eine Reinheit von mindestens 99,5% aufweisen. Ausserdem dürfen keine oxidischen Verunreinigungen vorhanden sein.

Da die Löttemperaturen für die erfindungsgemässen Legierungen in einem Bereich von 900 bis 1300 °C liegen, sind die entsprechenden Lötfolien in besonderer Weise zum Hartlöten von Keramik oder von Keramik mit Metall geeignet.

Solche Keramikteile können aus Aluminiumoxiden, Zirkonoxiden, Magnesiumoxiden oder Siliciumcarbiden bzw. deren Mischungen bestehen.

Bevorzugt werden die erfindungsgemässen Lötfolien zum Löten von Siliciumcarbidkeramik verwendet.

Geeignete Keramik-Metallverbindungen können aus Aluminiumoxiden, Magnesiumoxiden, Zirkonoxiden oder Siliciumcarbiden als Keramikkomponente und Nickel, Eisen, Titan oder deren Legierungen als Metallkomponente bestehen.

Bevorzugt wird die erfindungsgemässe Lötfolie für Verbindungen von Siliciumcarbid mit den genannten Metallen eingesetzt.

Die Herstellung der erfindungsgemässen Lötfolien erfolgt durch Abschrecken der Schmelze der genannten Legierung mit einer Kühlrate von mindestens $10^5$ °C/s. Dabei handelt es sich um Techniken, die in der Herstellung von glasartigen Metallen verbreitet sind.

Zur Herstellung der erfindungsgemässen Folien wird zweckmässig das Schmelzspinnverfahren herangezogen, wo das schmelzflüssige Metall auf einem schnell rotierenden Kupferzylinder, vorzugsweise in einer Schutzgasatmosphäre, abgeschreckt und als Band/ Folie abgezogen wird.

Unter diesen Bedingungen hergestellte Folien weisen amorphe oder teilamorphe Struktur und eine hohe Duktilität auf und sind in hohem Masse homogen.

Die Eisen-Chrom-Nickel-Bor-Siliciumcarbid-Legierungen der vorliegenden Erfindung müssen, um dem Einsatz als Lötfolie zu genügen, mindestens teilweise amorph sein.

Die Dicke der erfindungsgemässen Folien beträgt zweckmässig zwischen 20 und 120 μm, vorzugsweise 40 und 90 μm.

2

Beispiel

a) Bänderherstellung

Durch Aufbringen einer Metallschmelze, z.B. der nachfolgend in der Tabelle angegebenen Zusammensetzung, auf eine mit einer Umdrehungsgeschwindigkeit von 30 m/s sich bewegende Kupfertrommel, unter Helium als Schutzgas und einem Unterdruck von ca. 0,8 bar, wurden amorphe Eisen-Chrom-Nickel-Bor-Siliciumcarbid-Bänder mit einer Dicke von 60 µm und einer Breite von 20 mm hergestellt.

Die folgende Tabelle zeigt die Zusammensetzung einer erfindungsgemässen Lötfolie.

| Fe Atom% | Cr Atom% | Ni Atom% | Bi Atom% | SiC Mol% |
|----------|----------|----------|----------|----------|
| 38 | 14 | 18 | 12 | 18 |

b) Lötbeispiel

Die zu verbindenden Oberflächen eines Siliciumcarbidtestkörpers der Masse 10 x 10 x 6 mm und eines Nickeltestkörpers wurden mit Ethanol entfettet und gesäubert. Zwischen die Oberflächen wurde eine $Fe_{38}Cr_{14}Ni_{18}B_{12}SiC_{18}$-Lötfolie einer Dicke von 60 µm eingefügt.

Die Lötung wurde durchgeführt in einem induktiv beheizten Hochvakuumofen bei einem Druck von $10^{-5}$ mbar, einer Temperatur von 1200°C über eine Dauer von 40 min.

Es wurde eine chemische widerstandsfähige, sehr dauerhafte Lötverbindung erhalten.

**Ansprüche**

1. Homogene duktile Lötfolie mit mindestens teilweise amorpher Struktur und einer Legierungszusammensetzung von 20 bis 50 Atom% Eisen, 5 bis 20 Atom% Chrom, 10 bis 30 Atom% Nickel, 5 bis 20 Atom% Bor und 0 bis 30 Mol% Siliciumcarbid.

2. Lötfolie nach Anspruch 1 mit einer Legierungszusammensetzung von 20 bis 40 Atom% Eisen, 8 bis 18 Atom% Chrom, 15 bis 25 Atom% Nickel, 8 bis 18 Atom% Bor und 0 bis 20 Mol% Siliciumcarbid.

3. Lötfolie nach Anspruch 1 mit einer Legierungszusammensetzung von 38 Atom% Eisen, 14 Atom% Chrom, 18 Atom% Nickel, 12 Atom% Bor und 18 Mol% Siliciumcarbid.

4. Lötfolie nach einem der Ansprüche 1 bis 3, **dadurch gekennzeichnet**, daß sie eine Dicke von 20 bis 120 µm aufweist.

5. Verwendung einer Lötfolie nach Anspruch 1 zum Hartlöten von Keramikteilen untereinander und Keramikteilen mit Metallen.

6. Verwendung einer Lötfolie nach Anspruch 5 zum Hartlöten von Keramikteilen aus Siliciumcarbid.

7. Verwendung einer Lötfolie nach Anspruch 5 zum Hartlöten von Keramikteilen aus Siliciumcarbid mit Metallen aus der Reihe Nickel, Eisen oder Titan oder deren Legierungen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 103, Nr. 5, September 1985, Seite 217, Zusammenfassung Nr. 74659p, Columbus, Ohio, US; & JP-A-60 67 647 (TOSHIBA CORP.) 18-04-1985 * Zusammenfassung * --- | 1-4 | B 23 K 35/30 B 23 K 35/14 C 04 B 37/00 C 04 B 37/02 |
| A | EP-A-0 127 894 (GTE PRODUCTS) --- | | |
| A | US-A-4 410 604 (M.J. POHLMAN et al.) --- | | |
| A | US-A-4 402 742 (S. PATTANAIK) --- | | |
| A | FR-A- 886 222 (DEUTSCHE EDELSTAHLWERKE et al.) --- | | |
| A | FR-A-1 576 033 (SIEMENS) --- | | |
| A | DE-A-2 822 627 (VOLKSWAGENWERK) ----- | | |

RECHERCHIERTE SACHGEBIETE (Int. Cl.4)

B 23 K

Der vorliegende Recherchenbericht wurde für alle Patentansprüche erstellt

| Recherchenort | Abschlußdatum der Recherche | Prüfer |
|---|---|---|
| DEN HAAG | 28-08-1989 | MOLLET G.H.J. |

EPO FORM 1503 03.82 (P0403)